# FASCICULE DE BREVET EUROPEEN

(11) **EP 2 480 623 B1**
(45) Date de publication et mention de la délivrance du brevet: **11.12.2019**
(21) Numéro de dépôt: 10734752.8
(22) Date de dépôt: 26.07.2010
(51) Int. Cl.: C09K 8/584

(54) **METHODE DE RECUPERATION ASSISTEE DES HYDROCARBURES DANS DES RESERVOIRS FRACTURES**
VERFAHREN ZUR UNTERSTÜTZTEN RÜCKGEWINNUNG VON KOHLENWASSERSTOFFEN IN GEKLÜFTETEN LAGERSTÄTTEN
METHOD FOR THE ASSISTED RECOVERY OF HYDROCARBONS IN FRACTURED RESERVOIRS

(30) Priorité: 23.09.2009 FR 0904535
(43) Date de publication de la demande: 01.08.2012
(73) Titulaire: Rhodia Opérations, 93306 Aubervilliers (FR)
(72) Inventeur: CHABERT, Max, F-33800 Bordeaux (FR); MORVAN, Mikel, F-33600 Pessac (FR)
(74) Mandataire: Cordier, Pascal Christian
(86) Numéro de dépôt international: PCT/EP2010/060791
(87) Numéro de publication internationale: WO 2011/035948

(56) Documents cités:
- US-A- 4 842 065
- US-A1- 2007 107 897

## Description

L'invention concerne une méthode de récupération assistée des hydrocarbures dans des réservoirs fracturés.

Dans le cadre de la production de pétrole brut, ou huile, des formations souterraines, il existe déjà différentes méthodes pour optimiser l'extraction d'huile originale en place, en anglais OOIP pour « original oil in place ».

La méthode de production primaire de pétrole brut consiste, une fois le puits foré, à récupérer le pétrole brut par migration du pétrole de la formation de roche ou du sable, vers un puits « producteur » de plus basse pression. La production primaire est de ce fait la méthode d'extraction la moins chère. On récupère typiquement seulement 10 à 15 % d'OOIP. Néanmoins, au fur et à mesure que le pétrole est pompé, la pression du réservoir diminue et l'extraction devient plus difficile.

Des méthodes secondaires de production sont alors employées quand la pression souterraine devient insuffisante pour déplacer le pétrole restant. La technique la plus commune, l'inondation (waterflooding) utilise des puits d'injection qui poussent un fluide pousseur constitué de grands volumes d'eau sous pression dans la zone contenant le pétrole. Lors de sa migration de la zone vers un ou plusieurs puits producteur(s), l'eau injectée extrait une partie du pétrole qu'elle rencontre. A la surface, le pétrole est séparé de l'eau injectée. L'inondation permet de récupérer des 10 à 30% additionnel d'OOIP.

Quand l'inondation (waterflooding) atteint le point où la production n'est plus rentable, une décision doit être prise: le changement de champ de pétrole, ou le recours à une autre phase d'exploitation. On peut alors utiliser une technique de récupération assistée utilisant l'inondation dans laquelle l'eau comprend des agents tensioactifs et/ou des polymères. Ces polymères sont utilisés pour augmenter la viscosité du fluide pousseur et améliorer ainsi le balayage du pétrole par le fluide pousseur. Il est par exemple connu d'augmenter la viscosité de l'eau au moyen d'agents viscosants comme des polyacrylamides partiellement hydrolysés de haut poids moléculaire. Ces polymères, dispersables et/ou solubles dans l'eau, permettent un balayage plus homogène de la formation en réduisant l'apparition de digitations visqueuses.

Les tensioactifs zwitterioniques et notamment les bétaines peuvent être utilisés comme agents viscosants du fait de leur stabilité dans des saumures dont la température peut atteindre 80°C et plus. Le terme zwitterionique décrit des tensioactifs ayant une charge positive permanente indépendamment du pH et ayant une charge négative au-delà d'un certain pH.

Dans une autre approche, les tensioactifs, au contact avec le pétrole contenu dans la roche ou le sable, abaissent la tension interfaciale eau/huile, pour permettre d'entraîner l'huile piégée dans les rétrécissements des pores du réservoir.

Cependant, de nombreux réservoirs hydrocarbonés ne sont pas homogènes sur le plan géologique et présentent une grande variabilité de porosité et de perméabilité. C'est le cas, en particulier, des réservoirs de carbonate qui sont souvent naturellement et abondamment fracturés. Ces réservoirs fracturés comportent deux éléments distincts : des fractures et une matrice constituée par la roche contenant le pétrole. Si le réseau de fractures permet un transfert aisé des fluides du réservoir, il ne représente qu'une faible fraction de la porosité totale du réservoir. La matrice qui possède une faible perméabilité renferme la majorité de la porosité du réservoir et donc de l'huile. Les techniques d'invasion d'eau mentionnées ci-dessus (« Water-flooding ») et appliquées à ces réservoirs, conduisent rapidement à une augmentation trop importante du rapport eau-huile au puits producteur. Après avoir entraîné le pétrole se trouvant dans les fractures, l'eau continue à se déplacer préférentiellement à travers le réseau de fractures et, ce faisant, n'entraine pas le pétrole de la matrice. Ceci tient au fait que la matrice est le plus souvent préférentiellement mouillable à l'huile comme c'est souvent le cas des réservoirs en carbonate. L'eau ne peut donc imbiber spontanément la matrice pour déplacer l'huile qui y est piégée et à cause des fractures, la perte de charge entre le puits injecteur et le puits producteur, tous les deux en communication avec les fractures et la matrice, est trop faible pour forcer cette imbibition.

Un procédé connu pour augmenter la pénétration d'eau dans la matrice, consiste à injecter une solution aqueuse de tensioactif spécifique ayant pour objet de créer des conditions favorables de mouillage à l'eau. Pour tirer partie de cette méthode, il est recommandé de procéder à une injection cyclique des fluides, méthode décrite sous le terme « cyclic wettability altération » comme illustrée dans les brevets US 4,842,065, US 5,014,783 et US 5,247,993. Le principe consiste à injecter en premier lieu une solution de tensioactifs capable d'altérer la mouillabilité de la matrice, pour ensuite observer un temps de latence avant d'injecter de l'eau. En répétant ainsi ces étapes on parvient à déplacer une partie de l'huile de la matrice. Cependant les ratios eau-huile restent insuffisants et ces procédés nécessitent des injections répétées et rapprochées de tensio-actif et d'eau.

Il existe donc un besoin d'améliorer ces procédés pour atteindre des ratios eau-huile plus favorables.

L'objet de la présente invention consiste en une combinaison de traitements chimiques en vue précisément d'obtenir des ratios eau-huile plus favorables au puits producteur et d'améliorer l'extraction d'huile dans la matrice d'un réservoir fracturé et mouillable à l'huile.

La présente invention concerne en effet un procédé pour récupérer du pétrole d'un réservoir fracturé dont la matrice est mouillable à l'huile comportant au moins un puits injecteur et un puits producteur, tous les deux en communication avec les fractures et la matrice comportant dans l'ordre les étapes suivantes :
a) injection dans un premier temps par un puits injecteur d'une solution de tensioactifs viscosants capable de pénétrer dans le réseau de fractures, interagissant faiblement avec la matrice, créant in situ un bouchon en vue de réduire sensiblement et sélectivement la perméabilité des fractures et de favoriser le passage de la solution de l'étape b) dans la matrice ;
b) injection dans un second temps par un puits injecteur d'une solution de tensioactifs capable d'interagir avec la matrice pour la rendre préférentiellement mouillable à l'eau et en extraire l'huile, ladite solution s'écoulant préférentiellement à travers la matrice, et, après un temps de latence d'au moins 24 heures,
c) injection dans un troisième temps par un puits injecteur d'une solution aqueuse en vue d'augmenter la tension de surface, imbiber la matrice, extraire l'huile, et après dissolution par ladite huile du bouchon formé à l'étape a), entrainer l'huile vers le puits producteur.

L'injection de l'étape a) se fait de préférence à une pression d'injection qui n'entraine pas une fracturation supplémentaire du réservoir.

Le temps de latence entre la seconde étape b) et la troisième étape c) qui est d'au moins 24 heures est préférentiellement inférieur à 6 mois, de façon encore plus préférée 3 mois et encore mieux un mois, le temps pour permettre la solution de tensioactifs de l'étape b) de rendre la matrice mouillable à l'eau et en extraire au maximum l'huile et permettre ainsi à l'huile de commencer à dissoudre le bouchon formé à l'étape a).

Le bouchon formé à l'étape a) est sous la forme d'un liquide très visqueux ou d'un gel et permet donc de réduire sensiblement et sélectivement la perméabilité des fractures et de favoriser le passage de la solution de l'étape b) dans la matrice.

Le procédé c'est-à-dire la mise en œuvre des étapes a), b) et c), peut être répété autant de fois que nécessaire jusqu'à l'obtention de l'épuisement du puits.

La solution de tensioactif viscosante comporte préférentiellement au moins un tensioactif zwitterionique répondant à la formule (1) suivante : 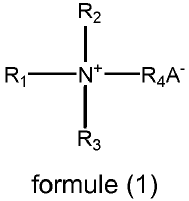 dans laquelle :
A⁻ représente les groupes carboxylate COO⁻ ou sulfonate SO₃⁻,
R₁ représente une partie hydrophobe d'un groupe alkyle, alkoxyalkyle, alkylaminoalkyle et alkylamidoalkyle, linéaires ou ramifiés, saturés ou, de préférence, insaturés, contenant environ de 16 à 30, de préférence de 18 à 28 atomes de carbone,
R₂ et R₃ représentent indépendamment une chaîne aliphatique ayant de 1 à 30 atomes de carbone, de préférence de 1 à 20 atomes de carbone, de façon plus préférée de 1 à 10 atomes de carbone, et de façon encore plus préférée de 1 à 6 atomes de carbone, ledit groupe aliphatique pouvant être droit ou ramifié, saturé ou insaturé, les groupes R₂ et R₃ préférés étant les goupes méthyle et hydroxyméthyle, éthyle et hydroxy-2 éthyle, propyle et hydroxy-3 propyle, et
R₄ est un groupe alkylène ayant de 1 à 4 atomes de carbone, éventuellement substitué par un groupe hydroxyle.

Des exemples spécifiques de tensioactifs viscosants zwitterioniques incluent les structures suivantes:
Dans la formule (1), R₁ peut être un alkylamidopropyle, R₂ et R₃ représentent un groupe hydroxy-2 éthyle, méthyle ou éthyle, R₄ est un groupe méthylène et A un groupe carboxylate et les structures peuvent alors répondre à la formule (2) : 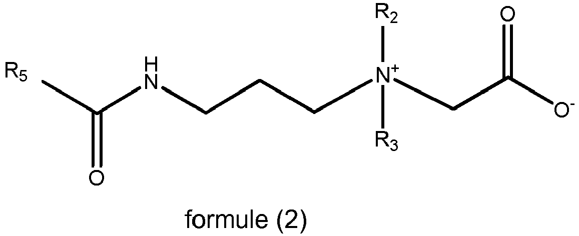 dans laquelle :
R₁ de la formule (1) est le groupe alkylamidopropyle de formule: R₅CONHCH₂CH₂CH₂ dans la formule (2) et

le groupe R₅ - C=O, est un groupe alkanoyle en C₁₂-C₂₄.. Ce groupe alkanoyle en C₁₂-C₂₄ est choisi notamment parmi les groupes dodécanoyle, tetradécanoyle (myristoyle), hexadécénoyle (cétoyle), octadécènoyle (oléoyle), octadécanoyle (stéaroyle), et docosénoyle (érucoyle) .

Selon une autre variante d'exécution, dans la formule (1), R₁ est un alkylamidopropyle et le groupe R₅ - C=O, est un groupe alkanoyle en C₁₂-C₂₄ choisi notamment parmi les groupes dodécanoyle, tetradécanoyle (myristoyle), hexadécénoyle (cétoyle), octadécènoyle (oléoyle), octadécanoyle (stéaroyle), et docosénoyle (érucoyle)

R₂ et R₃ représentent un groupe hydroxy-2éthyle, méthyle ou éthyle, R₄ un groupe propylidène optionnellement hydroxylé et A un groupe sulfonate et peuvent alors par exemple répondre à la formule (3) : 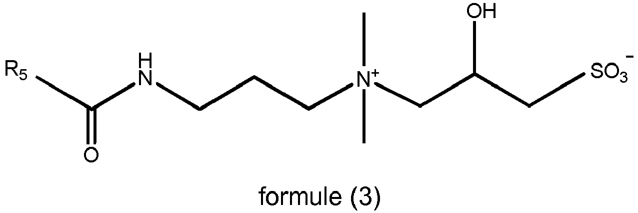 dans laquelle R₂ et R₃ de la formule (1) représentent un méthyle dans la formule (3), R₄ de la formule (1) un groupe hydroxy-propylidène dans la formule (3) et A de la formule (1) un groupe sulfonate dans la formule (3).

Selon une autre variante d'exécution, dans la formule (1), R₁ est un groupe alkyle en C₁₂-C₂₄ préférentiellement choisi parmi les groupes dodécyle (lauryl), tétradécyle (myristyle), hexadécyle (cétyle), octadécényle (oléyle), octadécyle (stéaryle), docosénoique (érucyle),

R₂ et R₃ représentent un groupe hydroxy-2 éthyle, méthyle ou éthyle, R₄ est un groupe méthylène et A un groupe carboxylate et les tensio-actifs viscosants peuvent alors répondre à la formule (4) :

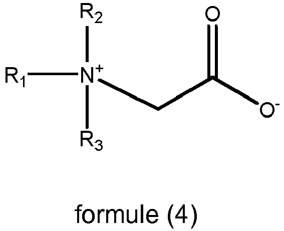

Selon une autre variante d'exécution, dans la formule (1), R₁ est un groupe alkyle en C₁₂-C₂₄ préférentiellement choisi parmi les groupes dodécyle (lauryl), tétradécyle (myristyle), hexadécyle (cétyle), octadécényle (oléyle), octadécyle (stéaryle), docosénoique (érucyle), R₂ et R₃ représentent un groupe hydroxy-2éthyle, méthyle ou éthyle, R₄ un groupe propylidène optionnellement hydroxylé et A un groupe sulfonate et et les tensio-actifs viscosants peuvent alors par exemple répondre à la formule (5) : 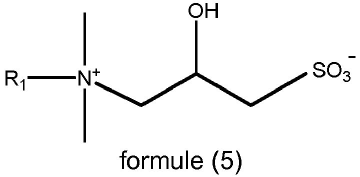 dans laquelle R₂ et R₃ de la formule (1) représentent un méthyle dans la formule (5), R₄ de la formule (1) un groupe hydroxy-propylidène dans la formule (5) et A de la formule (1) un groupe sulfonate dans la formule (5).

Des exemples de tensioactifs recommandés pour la mise en œuvre de l'invention sont plus particulièrement décrits dans les brevets US 7461694 et US 6831108.

La concentration en tensioactif viscosant est choisie pour avoir préférentiellement une viscosité à un gradient de vitesse de 10s⁻¹ équivalente à au moins 5 fois et plus préférentiellement au moins 10 fois la viscosité de l'eau d'injection à la température du réservoir. Ces conditions qui conduisent à un envahissement préférentiel du réseau de fractures par le tensioactif viscosant permettent in fine de forcer la pénétration de l'agent mouillant dans la matrice et donc de modifier plus efficacement la mouillabilité de cette matrice. Un second avantage de la présente invention tient au fait que lorsque l'huile produite à partir de la matrice lors de l'étape b) interagit avec l'agent viscosant vers la fin de l'étape b) et au début de l'étape c), la viscosité de ce dernier chute pour autoriser le passage de l'huile à travers le réseau de fractures et son extraction au puits producteur.

Tout tensioactif capable d'interagir avec la matrice pour la rendre préférentiellement mouillable à l'eau est utilisable à l'étape b) du procédé de l'invention dans la mesure où il satisfait le critère de changement de mouillabilité de la matrice. Par agent mouillant on entend tout tensio-actif permettant en présence d'huile de diminuer l'angle de contact de la solution aqueuse sur la surface de la roche du puits considéré par rapport à l'angle de contact de l'eau d'injection non additivée. Les agents mouillants sont de préférence choisis parmi les tensio-actifs anioniques, non-ioniques ou amphotères. A titre d'exemples non limitatifs d'agents mouillants non-ioniques on peut citer les alkyl aryl polyethers polyalcools tels que les alkyl phénols éthoxylés, les alcools gras éthoxylés ou éthoxylés/propoxylés, les esters de glycérol, les alkanolamides, les amines grasses éthoxylées ou époxy propoxylées, les tristyrylphenol ethoxylés ou éthoxylés/propoxylés, les mercaptans ethoxylés, les EO-PO block copolymères. A titre d'exemples non limitatifs d'agents mouillants anioniques on peut citer les alkyléther sulfates, alkylsulfonates, alkylaryl sulfonates, les phosphates esters d'alkyl et/ou d'alkyléther et/ou d'alkyl aryl ether . A titre d'exemples non limitatifs de tensio-actif amphotère on peut citer les dérivés d'imidazoline et d'alkylpolyamines.

La solution aqueuse de l'étape c) peut être soit de l'eau douce éventuellement additivée de sels minéraux apportant des ions tels que des ions sulfates, calcium, sodium et carbonates, soit de l'eau de mer. Un des avantages du procédé de l'invention est que l'ensemble des 3 étapes du cycle de traitement peut être effectué à partir du même puits injecteur ou encore à partir de puits injecteurs différents. On peut notamment envisager d'injecter le traitement viscosant et l'agent mouillant dans un même puits injecteur pour ensuite effectuer le balayage à l'eau dans un autre puits injecteur adjacent.

Les exemples suivants illustrent l'invention sans en limiter la portée. Référence sera faite au dessin annexé sur lequel :
la figure 1 représente le volume de solution s'écoulant au cours du temps sous une pression constante de 30 mbars à travers un micromodèle de milieu poreux,
la figure 2 représente un micromodèle de milieu poreux à double porosité où seuls les pores à grande porosité 1 sont envahis par une solution de tensio-actif, dont une portion 2 a été agrandie environ 7 fois, et
la figure 3 représente un micromodèle de milieu poreux à double porosité, dont une portion 3 a été agrandie environ 7 fois où les pores à grande porosité 1 ayant été préremplis par une solution de tensio-actif viscosant, les pores de faible porosité 4 sont remplis par la solution de tensio-actif éventuellement mouillant.

### Exemple 1 : bouchage d'un milieu poreux de grande perméabilité par un surfactant viscosant.

Une solution d'érucylamidopropyl bétaine à 3000 ppm dans de l'eau de mer synthétique (9.75 g/L Na⁺, 1.41 g/L Mg²⁺, 20.31 g/L Cl⁻, 0.42 g/L K⁺, 0.44 g/L Ca²⁺) - viscosité 20 mPa.s à 100 s⁻¹ - est injectée à température ambiante et sous une pression constante de 30 mbars dans un micromodèle de milieu poreux régulier de perméabilité 10 darcy (volume de pores 10 µL).

Le volume de solution s'écoulant est pesé au cours du temps. Après une demi-heure de circulation dans le micromodèle (soit environ un volume poreux de liquide injecté), le débit devient quasiment nul. L'érucylamidopropyl bétaine a un effet bouchon dans un milieu poreux de perméabilité importante (dimensions caractéristiques 50 microns). Le taux de cisaillement moyen dans cet exemple est d'environ 100 s⁻¹.

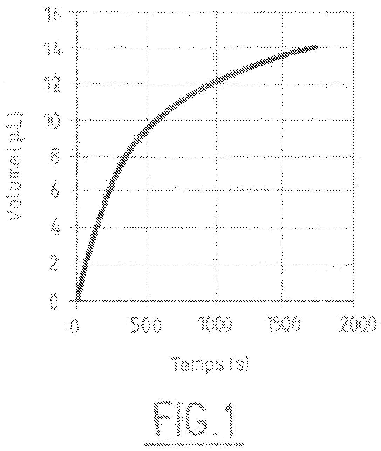

La figure 1 du dessin annexé représente le volume de solution s'écoulant au cours du temps sous une pression constante de 30 mbars.

### Exemple 2 : diversion d'un agent tensio-actif éventuellement mouillant depuis la fracture vers la matrice poreuse.

Un micromodèle de milieu poreux possédant une double distribution de tailles de pores (respectivement 4 darcy -matrice - et 100 darcy - fracture) est utilisé. Ce micromodèle est initialement rempli d'huile (dodécane). La fracture contient 20 % de la porosité du micromodèle, la matrice contient les 80% restant.

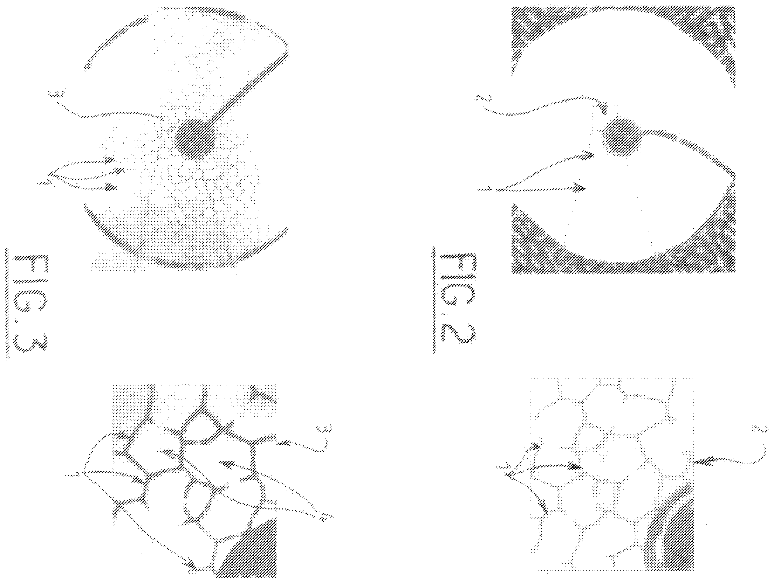

Dans un premier mode d'injection, un tensio-actif (dodecylbenzene-sulfonate) est injecté directement à un nombre capillaire d'environ 10⁻⁶ dans le milieu à double porosité. Comme le montre la figure 2, seuls les fractures (canaux 1 de grande perméabilité) sont envahies en un temps d'une heure, soit une récupération d'huile de 20 % OOIP.

Dans un second mode d'injection, une solution d'érucylamidopropyl bétaine à 3000 ppm dans de l'eau de mer synthétique (composition et viscosité de l'exemple 1) est injectée à un nombre capillaire Ca de 10⁻⁵. Seules les fractures sont envahies (20% OOIP). On injecte dans un second temps la solution de tensio-actif (dodecylbenzene-sulfonate) à un nombre capillaire Ca de 10⁻⁶. On peut voir sur la figure 3 que le tensio-actif a cette fois-ci envahi les fractures 1 et la matrice (canaux 4 de plus faible perméabilité). La quantité d'huile supplémentaire récupérée est estimée à environ 40% de l'OOIP.

Ceci démontre l'intérêt de notre méthode pour favoriser la pénétration d'un agent tensio-actif depuis une fracture vers une matrice mouillée à l'huile.

La figure 2 du dessin annexé représente la photographie du micromodèle à double porosité. Après circulation d'un tensio-actif à Ca=10⁻⁶, seules les fractures 1 sont envahies (20% OOIP). La figure 3 du dessin annexé représente la photographie du micromodèle à double porosité : lorsque les fractures 1 ont été préremplies avec un surfactant viscosant, le tensio-actif circulant à Ca=10⁻⁶ pénètre dans la matrice depuis la fracture (40% OOIP supplémentaire).

## Revendications

1. Procédé pour récupérer du pétrole d'un réservoir fracturé dont la matrice est mouillable à l'huile comportant au moins un puits injecteur et un puits producteur, tous les deux en communication avec les fractures et la matrice comportant dans l'ordre les étapes suivantes :
a) injection dans un premier temps par un puits injecteur d'une solution de tensioactifs viscosants capable de pénétrer dans le réseau de fractures, interagissant faiblement avec la matrice, créant in situ un bouchon en vue de réduire sensiblement et sélectivement la perméabilité des fractures et de favoriser le passage de la solution de l'étape b) dans la matrice ;
b) injection dans un second temps par un puits injecteur d'une solution de tensioactifs capable d'interagir avec la matrice pour la rendre préférentiellement mouillable à l'eau et en extraire l'huile, ladite solution s'écoulant préférentiellement à travers la matrice, et, après un temps de latence d'au moins 24 heures,
c) injection dans un troisième temps par un puits injecteur d'une solution aqueuse en vue d'augmenter la tension de surface, imbiber la matrice, extraire l'huile, et après dissolution par ladite huile du bouchon formé à l'étape a), entrainer l'huile vers le puits producteur.

2. Procédé selon la revendication 1, **caractérisé en ce que** l'étape a) se fait à une pression d'injection qui ne n'entraine pas une fracturation supplémentaire du réservoir.

3. Procédé selon la revendication 1 ou 2, **caractérisé en ce que** le temps de latence entre la seconde b) et la troisième étape c) est d'au moins 24 heures et préférentiellement inférieur à 6 mois, de façon encore plus préférée 3 mois et encore mieux un mois.

4. Procédé selon l'une quelconque des revendications précédentes, **caractérisé en ce que** la solution de tensioactif viscosant comporte au moins un tensioactif zwitterionique répondant à la formule (1) suivante : 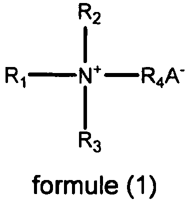 dans laquelle :
A⁻ représente les groupes carboxylate COO⁻ ou sulfonate SO₃⁻,
R₁ représente une partie hydrophobe d'un groupe alkyle, alkoxyalkyle, alkylaminoalkyle et alkylamidoalkyle, linéaires ou ramifiés, saturés ou , de préférence, insaturés, contenant de 18 à 28 atomes de carbone,
R₂ et R₃ représentent indépendamment une chaîne aliphatique ayant de 1 à 30 atomes de carbone, de préférence de 1 à 20 atomes de carbone, de façon plus préférée de 1 à 10 atomes de carbone, et de façon encore plus préférée de 1 à 6 atomes de carbone, ledit groupe aliphatique pouvant être droit ou ramifié, saturé ou insaturé, les groupes R₂ et R₃ préférés étant les goupes méthyle et hydroxyméthyle, éthyle et hydroxy-2 éthyle, propyle et hydroxy-3 propyle, et
R₄ est un groupe alkylène ayant de 1 à 4 atomes de carbone éventuellement substitué par un groupe hydroxyle.

5. Procédé selon la revendication 4, **caractérisé en ce que** dans la formule (1), R₁ est un alkylamidopropyle, R₂ et R₃ représente un groupe hydroxy-2éthyle, méthyle ou éthyle, R₄ un groupe alkylène et A un groupe carboxylate.

6. Procédé selon la revendication 5, **caractérisé en ce que** le tensioactif viscosant répond à la formule (2) : 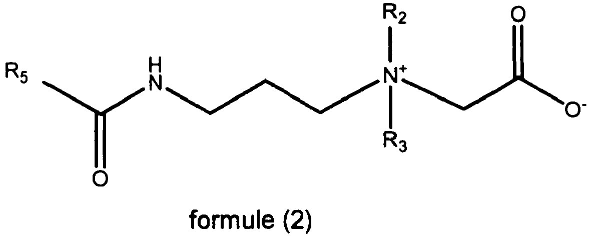 dans laquelle :
R₄ de la formule (1) représente un groupe méthylène dans la formule (2),
R₁ de la formule (1) est le groupe alkylamidopropyle de formule: R₅CONHCH₂CH₂CH₂ dans la formule (2) et
dans laquelle le groupe R₅- C=O, est un groupe alkanoyle en C₁₂-C₂₄.

7. Procédé selon la revendication 6, **caractérisé en ce que** le groupe R₅-C=O, est choisi parmi les groupes dodécanoyle, tetradécanoyle (myristoyle), hexadécénoyle (cétoyle), octadécènoyle (oléoyle), octadécanoyle (stéaroyle), et docosénoyle (érucoyle).

8. Procédé selon la revendication 4, **caractérisé en ce que** dans la formule (1) R₄ est un groupe propylidène optionnellement hydroxylé, A est un groupe sulfonate et le tensioactif viscosant répond par exemple à la formule (5) : 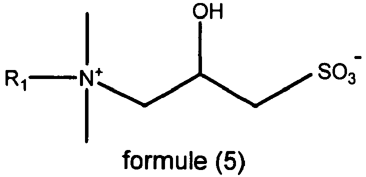 dans laquelle R₂ et R₃ de la formule (1) représentent un méthyle dans la formule (5), R₄ de la formule (1) un groupe hydroxy-propylidène dans la formule (5) et A de la formule (1) un groupe sulfonate dans la formule (5).

9. Procédé selon l'une quelconque des revendications précédentes, **caractérisé en ce que** les agents mouillants utilisés lors de l'étape b) sont choisis parmi les tensio-actifs anioniques, non-ioniques et amphotères.

10. Procédé selon la revendication 9, **caractérisée en ce que** les agents mouillants sont les alkyl aryl polyethers polyalcools tels que les alkyl phénols éthoxylés, les alcools gras éthoxylés ou éthoxylés/propoxylés, les esters de glycérol, les alkanolamides, les amines grasses éthoxylées ou éthoxylées/propoxylées, les tristyrylphenol ethoxylés ou éthoxylés/propoxylés, les mercaptans ethoxylés, les EO-PO block copolymères, les alkyléther sulfates, alkylsulfonates, alkylaryl sulfonates, les phosphates esters d'alkyl et/ou d'alkyléther et/ou d'alkyl aryl ether, les dérivés d'imidazoline et d'alkylpolyamines..

11. Procédé selon l'une quelconque des revendications précédentes, **caractérisé en ce que** les étapes a), b) et c) sont répétés jusqu' à l'épuisement du puits.

12. Procédé selon l'une quelconque des revendications précédentes, **caractérisé en ce que** la solution aqueuse de l'étape c) peut être soit de l'eau douce éventuellement additivée de sels minéraux apportant des ions tels que des ions sulfates, calcium, sodium et carbonates, soit de l'eau de mer.

## Patentansprüche

1. Verfahren zum Gewinnen von Erdöl aus einer von Rissen durchzogenen Lagerstätte, deren Matrix ölbenetzbar ist und die mindestens eine Injektionsbohrung und eine Förderbohrung aufweist, welche beide mit den Rissen und der Matrix in Verbindung stehen, wobei es die folgenden Schritte in dieser Reihenfolge aufweist:
a) Injektion, durch eine Injektionsbohrung, erstens einer Lösung von viskositätserhöhenden Tensiden, die dazu befähigt ist, in das Netzwerk von Rissen einzudringen, wobei eine geringe Wechselwirkung mit der Matrix erfolgt, um vor Ort derart einen Stopfen zu erzeugen, dass die Durchlässigkeit der Risse auf selektive Weise verringert wird und das Eindringen der Lösung des Schrittes b) in die Matrix gefördert wird;
b) Injektion, durch eine Injektionsbohrung, zweitens einer Lösung von Tensiden, die dazu befähigt ist, mit der Matrix in Wechselwirkung zu treten, um sie vorzugsweise wasserbenetzbar zu machen und Öl aus derselben zu extrahieren, wobei die Lösung sich vorzugsweise durch die Matrix ergießt, und, nach einer Latenzzeit von mindestens 24 Stunden,
c) Injektion, durch eine Injektionsbohrung, drittens einer wässrigen Lösung, um die Oberflächenspannung zu erhöhen, die Matrix mit Flüssigkeit zu sättigen, das Öl zu extrahieren und das Öl, nachdem es sich in dem Stopfen gelöst hat, welcher in Schritt a) gebildet wurde, zur Förderbohrung zu befördern.

2. Verfahren nach Anspruch 1, **dadurch gekennzeichnet, dass** der Schritt a) bei einem Injektionsdruck erfolgt, der keine weitere Rissbildung in der Lagerstätte bewirkt.

3. Verfahren nach Anspruch 1 oder 2, **dadurch gekennzeichnet, dass** die Latenzzeit zwischen dem zweiten b) und dem dritten Schritt c) mindestens 24 Stunden und vorzugsweise weniger als 6 Monate, mit noch stärkerem Vorzug 3 Monate und wiederum bevorzugt einen Monat beträgt.

4. Verfahren nach einem beliebigen der vorhergehenden Ansprüche, **dadurch gekennzeichnet, dass** die Lösung von viskositätserhöhendem Tensid mindestens ein zwitterionisches Tensid aufweist, welches der folgenden Formel (1) entspricht: 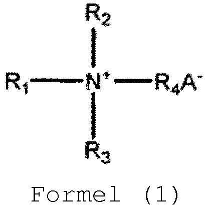 wobei:
A⁻ für die Gruppen Carboxylat COO⁻ oder Sulfonat SO₃⁻ steht,
R₁ für einen hydrophoben Abschnitt einer Alkyl-, Alkoxyalkyl, Alkylaminoalkyl- und Alkylamidoalkylgruppe geradkettiger oder verzweigter Beschaffenheit steht, wobei diese gesättigt oder, vorzugsweise, ungesättigt sind und 18 bis 18 Kohlenstoffatome enthalten,
R₂ und R₃ unabhängig voneinander für eine aliphatische Kette mit 1 bis 30 Kohlenstoffatomen, vorzugsweise 1 bis 20 Kohlenstoffatomen, stärker bevorzugt 1 bis 10 Kohlenstoffatomen und noch stärker bevorzugt 1 bis 6 Kohlenstoffatomen stehen, wobei die aliphatische Gruppe gerade oder verzweigt, gesättigt oder ungesättigt sein kann, wobei die Gruppen R₂ und R₃ vorzugweise Methyl- und Hydroxymethyl-, Ethyl- und Hydroxy-2-ethyl-, Propyl- und Hydroxy-3-propyl-Gruppen entsprechen, und
R₄ eine Alkylengruppe mit 1 bis 4 Kohlenstoffatomen ist, die möglicherweise mit einer Hydroxylgruppe substituiert ist.

5. Verfahren nach Anspruch 4, **dadurch gekennzeichnet, dass** in der Formel (1) R₁ ein Alkylamidopropyl ist, R₂ und R₃ für eine Hydroxy-2-ethyl-, Methyl- oder Ethylgruppe stehen, R₄ für eine Alkylengruppe steht und A für eine Carboxylatgruppe steht.

6. Verfahren nach Anspruch 5, **dadurch gekennzeichnet, dass** das viskositätserhöhende Tensid der Formel (2) entspricht: 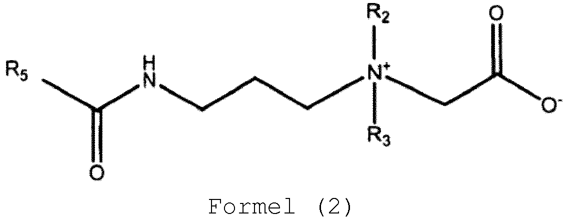 wobei:
R₄ der Formel (1) in Formel (2) für eine Methylengruppe steht,
R₁ der Formel (1) in Formel (2) der Alkylamidopropylgruppe der folgenden Formel entspricht: R₅CONHCH₂CH₂CH₂, und
wobei die Gruppe R₅-C=O eine C₁₂-C₂₄-Alkanoylgruppe ist.

7. Verfahren nach Anspruch 6, **dadurch gekennzeichnet, dass** die Gruppe R₅-C=O aus den Gruppen Dodecanoyl, Tetradecanoyl (Myristoyl), Hexadecenoyl (Cetoyl), Octadecenoyl (Oleoyl), Octadecanoyl (Stearoyl) und Docosenoyl (Erucoyl) ausgewählt ist.

8. Verfahren nach Anspruch 4, **dadurch gekennzeichnet, dass** in der Formel (1) R₄ eine Propylidengruppe ist, die möglicherweise hydroxyliert ist, A eine Sulfonatgruppe ist und das viskositätserhöhende Tensid beispielsweise der Formel (5) entspricht: 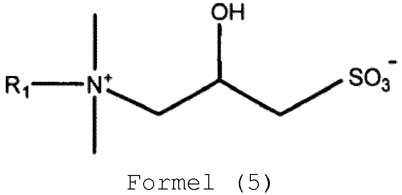 wobei R₂ und R₃ der Formel (1) in Formel (5) für ein Methyl, R₄ der Formel (1) in Formel (5) für eine Hydroxypropylidengruppe, und A der Formel (1) in Formel (5) für eine Sulfonatgruppe stehen.

9. Verfahren nach einem beliebigen der vorhergehenden Ansprüche, **dadurch gekennzeichnet, dass** die Netzmittel, welche während des Schrittes b) verwendet werden, aus den anionischen, nichtionischen und amphoteren Tensiden ausgewählt sind.

10. Verfahren nach Anspruch 9, **dadurch gekennzeichnet, dass** es sich bei den Netzmitteln um Alkylarylpolyether-Polyalkohole handelt, wie etwa um ethoxylierte Alkylphenole, um ethoxylierte oder ethoxylierte/propoxylierte Fettalkohole, um Glycerinester, um Alkanolamide, um ethoxylierte oder ethoxylierte/propoxylierte Fettamine, um ethoxylierte oder ethoxylierte/propoxylierte Tristyrylphenole, um ethoxylierte Mercaptane, um EO-PO-Blockcopolymere, um Alkylethersulfate, Alkylsulfonate, Alkylarylsulfonate, um Alkyl- und/oder Alkylether- und/oder Alkylarylether-Phosphatester, um Derivate von Imidazolin und Alkylpolyaminen.

11. Verfahren nach einem beliebigen der vorhergehenden Ansprüche, **dadurch gekennzeichnet, dass** die Schritte a), b) und c) wiederholt werden, bis die Quelle erschöpft ist.

12. Verfahren nach einem beliebigen vorhergehenden Ansprüche, **dadurch gekennzeichnet, dass** es sich bei der wässrigen Lösung des Schrittes c) entweder um Süßwasser, dem möglicherweise Mineralsalze zugesetzt wurden, welche Ionen wie etwa Sulfat-, Calcium-, Natrium- und Carbonationen bereitstellen, oder um Meerwasser handelt.

## Claims

1. Process for recovering oil from a fractured reservoir, the matrix of which is oil-wet, comprising at least one injection well and one output well, both in communication with the fractures and the matrix, comprising, in order, the following stages:
a) injection, firstly, via an injection well, of a solution of viscosifying surfactants capable of penetrating the network of fractures, interacting weakly with the matrix, creating in situ a plug for the purpose of substantially and selectively reducing the permeability of the fractures and of promoting the passage of the solution of stage b) into the matrix,
b) injection, secondly, via an injection well, of a solution of surfactants capable of interacting with the matrix in order to render it preferentially water-wet and to extract the oil therefrom, the said solution preferentially flowing through the matrix, and, after a latent period of at least 24 hours,
c) injection, thirdly, via an injection well, of an aqueous solution for the purpose of increasing the surface tension, imbibing the matrix, extracting the oil and, after dissolution by the said oil of the plug formed in stage a), carrying along the oil to the output well.

2. Process according to Claim 1, **characterized in that** stage a) is carried out at an injection pressure which does not result in additional fracturing of the reservoir.

3. Process according to Claim 1 or 2, **characterized in that** the latent period between the second stage b) and the third stage c) is at least 24 hours and preferably less than 6 months, more preferably still 3 months and better still one month.

4. Process according to any one of the preceding claims, **characterized in that** the viscosifying surfactant solution comprises at least one zwitterionic surfactant corresponding to the following formula (1): 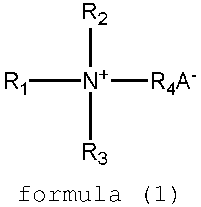 in which:
A⁻ represents the carboxylate COO⁻ or the sulphonate SO₃⁻ groups,
R₁ represents a hydrophobic part of a saturated or, preferably, unsaturated and linear or branched alkyl, alkoxyalkyl, alkylaminoalkyl and alkylamidoalkyl group comprising from 18 to 28 carbon atoms,
R₂ and R₃ independently represent an aliphatic chain having from 1 to 30 carbon atoms, preferably from 1 to 20 carbon atoms, more preferably from 1 to 10 carbon atoms and more preferably still from 1 to 6 carbon atoms, it being possible for the said aliphatic group to be saturated or unsaturated and straight or branched, the preferred R₂ and R₃ groups being the methyl and hydroxymethyl, ethyl and 2-hydroxyethyl, and propyl and 3-hydroxypropyl groups, and
R₄ is an alkylene group having from 1 to 4 carbon atoms, optionally substituted by a hydroxyl group.

5. Process according to Claim 4, **characterized in that**, in the formula (1), R₁ is an alkylamidopropyl, R₂ and R₃ represent a 2-hydroxyethyl, methyl or ethyl group, R₄ represents an alkylene group and A represents a carboxylate group.

6. Process according to Claim 5, **characterized in that** the viscosifying surfactant corresponds to the formula (2): 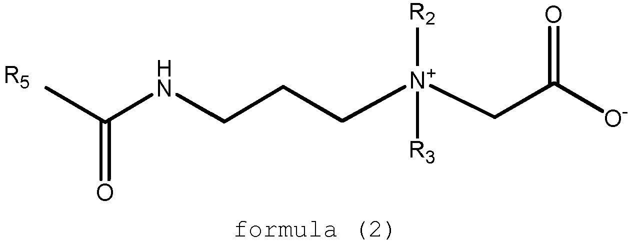 in which:
R₄ of the formula (1) represents a methylene group in the formula (2),
R₁ of the formula (1) is the alkylamidopropyl group of formula: R₅CONHCH₂CH₂CH₂ in the formula (2), and
in which the R₅-C=O group is a C₁₂-C₂₄ alkanoyl group.

7. Process according to Claim 6, **characterized in that** the R₅-C=O group is chosen from the dodecanoyl, tetradecanoyl (myristoyl), hexadecenoyl (cetoyl), octadecenoyl (oleoyl), octadecanoyl (stearoyl) and docosenoyl (erucoyl) groups.

8. Process according to Claim 4, **characterized in that**, in the formula (1), R₄ is an optionally hydroxylated propylidene group and A is a sulphonate group and the viscosifying surfactant corresponds, for example, to the formula (5): 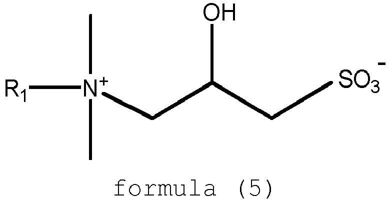 in which R₂ and R₃ of the formula (1) represent a methyl in the formula (5), R₄ of the formula (1) represents a hydroxypropylidene group in the formula (5) and A of the formula (1) represents a sulphonate group in the formula (5).

9. Process according to any one of the preceding claims, **characterized in that** the wetting agents used during stage b) are chosen from anionic, nonionic and amphoteric surfactants.

10. Process according to Claim 9, **characterized in that** the wetting agents are alkyl aryl polyether polyalcohols, such as ethoxylated alkylphenols, ethoxylated or ethoxylated/propoxylated fatty alcohols, glycerol esters, alkanolamides, ethoxylated or ethoxylated/propoxylated fatty amines, ethoxylated or ethoxylated/propoxylated tristyrylphenols, ethoxylated mercaptans or EO/PO block copolymers, alkyl ether sulphates, alkylsulphonates, alkylarylsulphonates, alkyl and/or alkyl ether and/or alkylaryl ether phosphate esters, imidazoline derivatives and alkylpolyamine derivatives.

11. Process according to any one of the preceding claims, **characterized in that** stages a), b) and c) are repeated until the well is exhausted.

12. Process according to any one of the preceding claims, **characterized in that** the aqueous solution of stage c) can either be fresh water optionally additivated with inorganic salts contributing ions, such as sulphate, calcium, sodium and carbonate ions, or seawater.
